# EUROPEAN PATENT APPLICATION

(11) **EP 4 660 516 A1**
(43) Date of publication of application: **10.12.2025**
(21) Application number: 25177893.2
(22) Date of filing: 21.05.2025
(51) Int. Cl.: F17C 5/00, F17C 5/06

(54) **SYSTEM FOR REFUELING A HYDROGEN VEHICLE**

(30) Priority: 04.06.2024 IT 202400012739
(71) Applicant: IVECO S.P.A., 10156 Torino (IT)
(72) Inventor: SHAMMA, Mohamed, 10156 Torino (IT); GROTTENTHALER, David, 10156 Torino (IT)
(74) Representative: Studio Torta S.p.A.

(57) **Abstract**

A system is provided for refueling a hydrogen vehicle (3) by a hydrogen refueling station (5). The hydrogen vehicle comprises: a hydrogen powering unit (7) configured to provide first data (V1_DATA) indicative of a health status of the hydrogen powering unit; first communication means (13) configured to send the first data (V1_DATA) to the hydrogen refueling station (5); and second communication means (15; 105) configured to establish a unidirectional or bidirectional communication with the hydrogen refueling station.

## Description

### CROSS-REFERENCE TO RELATED APPLICATIONS

This patent application claims priority from Italian patent application no. 102024000012739 filed on June 4, 2024, the entire disclosure of which is incorporated herein by reference.

### TECHNICAL FIELD

The present invention relates to a system for refueling a hydrogen vehicle.

The present invention finds its preferred, although not exclusive, application to heavy vehicles such as trucks or public transportation vehicles. However, the present invention may be applied to a broad spectrum of hydrogen-powered vehicles, for example heavy trucks, buses, passenger cars, off-road vehicles, encompassing both fuel cell vehicles and hydrogen internal combustion vehicles.

### BACKGROUND OF THE INVENTION

As is known, vehicles are increasingly adopting alternative energy sources to power their drive systems, aiming to reduce reliance on polluting fossil fuels and promote environmental sustainability.

One of the emerging energy sources for providing the driving torque of the vehicle is hydrogen.

Hydrogen vehicles comprise tanks that store hydrogen and that may be refueled at dedicated hydrogen refueling stations.

During hydrogen refueling, a nozzle of the refueling station is inserted within a receptacle of the vehicle for allowing flow of hydrogen from the refueling station into the tanks of the vehicle.

Standards have been developed for regulating refueling of a hydrogen vehicle.

For example, the standard SAE J2601 regulates the fueling protocols for light duty gaseous hydrogen surface vehicles, whereas standard SAE J2799 regulates the communication between the hydrogen vehicle and the refueling station.

Standards SAE J2601 and J2799 provide that establishing a communication from the vehicle to the refueling station is crucial for achieving a high flow of hydrogen and so a low refueling time.

In detail, according to standard SAE J2799, the communication between the vehicle is a unidirectional communication wherein vehicle data useful for the refueling operation are transmitted to the refueling station by means of infrared signals.

In detail, according to standard SAE J2799, critical parameters of the vehicle to be transmitted to the refueling station are: hydrogen tank temperature, hydrogen tank pressure, tank volume, receptacle type, fueling command.

In more detail, the receptacle of the vehicle has an infrared (IR) transmitter and the nozzle of the refueling station has an infrared (IR) receiver. During refueling, the vehicle sends the data to the refueling station.

However, the known data communication has some drawbacks.

In fact, the known communication technology relies on line-of-sight communication between the infrared transmitter of the vehicle and the infrared receiver of the refueling nozzle.

Therefore, direct visibility between the IR transmitter and the IR receiver is essential and specific conditions may compromise a proper communication between the IR transmitter and the IR receiver, thereby impacting the operational range and the effectiveness of the communication.

The known IR communication interface is also subject to interference from ambient light and other infrared sources.

Moreover, the fact that the communication is unidirectional may not be sufficiently reliable for specific applications, especially for obtaining a sufficient Automotive Safety Integrity Level (ASIL) of the refueling process.

In addition, it is complex to provide a different communication system that maintains compatibility with existing refueling station implementations and existing vehicles.

Therefore, the need is felt to improve the known communication system between a hydrogen vehicle and a hydrogen refueling station.

An aim of the present invention is to satisfy the above-mentioned needs in a cost-effective and optimized manner.

### SUMMARY OF THE INVENTION

The aforementioned aim is reached by a hydrogen vehicle, a hydrogen refueling station, a refueling system and a refueling method, as claimed in the appended set of claims that are integral part of the present description.

### BRIEF DESCRIPTION OF DRAWINGS

For a better understanding of the present invention, preferred embodiments are described in the following, by way of non-limiting examples, with reference to the attached drawings wherein:
- Figure 1 is a block diagram of a system for refueling of a hydrogen vehicle, according to an embodiment of the present invention;
- Figure 2 is a schematic representation of a portion of the system of Figure 1, according to an embodiment of the present invention; and
- Figure 3 is a block diagram of a system for refueling of a hydrogen vehicle, according to a different embodiment of the present invention.

### DETAILED DESCRIPTION OF THE INVENTION

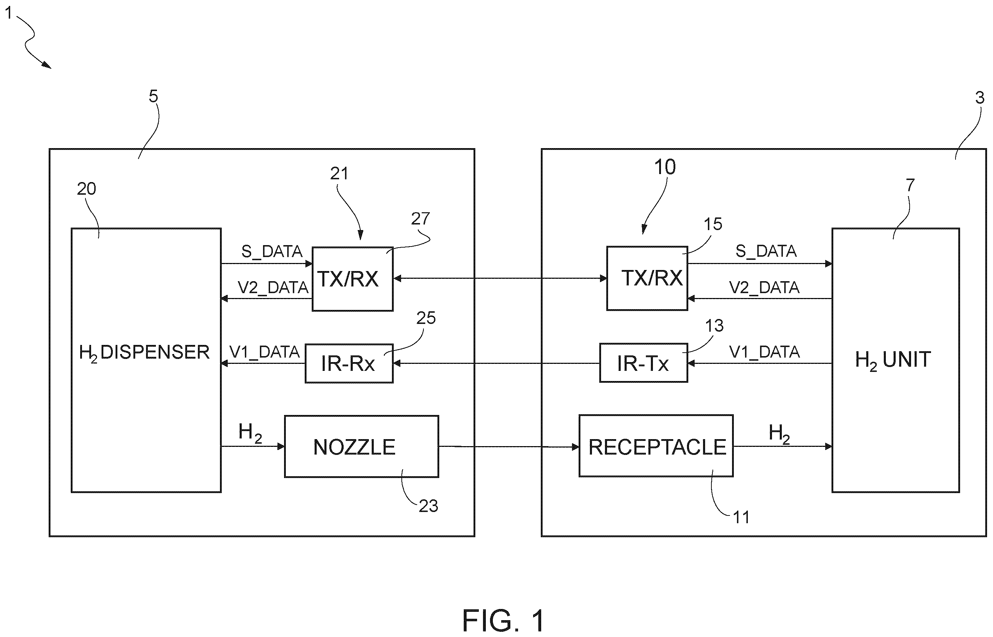

Figure 1 shows a block diagram of a system 1 for refueling a hydrogen vehicle 3, comprising a refueling station 5 and the hydrogen vehicle 3 (hereinafter also simply referred to as vehicle 3).

The vehicle 3 may be a surface vehicle, in particular a land vehicle.

Preferably, the vehicle 3 is a heavy vehicle such as a truck or a public transportation means (e.g., a bus).

The vehicle 3 uses hydrogen as fuel for generating a driving torque. In other words, the hydrogen vehicle 3 is powered by hydrogen.

For example, the hydrogen vehicle 3 may have a fuel-cell motor powered by hydrogen.

However, the vehicle 3 may generally be any hydrogen powered vehicle having a compressed gaseous-hydrogen refueling connection, for example heavy trucks, buses, passenger cars, off-road vehicles, etc., encompassing both fuel cell vehicles and hydrogen internal combustion vehicles.

The vehicle 3 comprises a hydrogen powering unit 7 that stores hydrogen and transforms hydrogen into driving torque of the vehicle 3.

In detail, the hydrogen powering unit 7 comprises one or more tanks (here not shown) for storing hydrogen.

The hydrogen powering unit 7 may also comprise one or more electronic elaboration units, control units, motors, and/or any other means useful for regulating the use of hydrogen for generating the driving torque of the vehicle 3.

The hydrogen powering unit 7 provides first vehicle data V1_DATA that are indicative of the health status of the hydrogen powering unit 7.

The first vehicle data V1_DATA may be indicative of one or more of the following: hydrogen temperature, pressure of the hydrogen tank(s), volume of the hydrogen tank(s), receptacle type, fueling command (e.g., command to start/stop refueling), presence (if any) of hydrogen leaks.

In particular, according to standard SAE J2799 (in particular in accordance with the latest version of the standard SAE J2799 at the date of filing of the present patent application), the first vehicle data V1_DATA may be indicative of: tank volume, receptacle type, fueling command, measured pressure and measured temperature, plus any other optional data.

For example, the hydrogen unit 7 may comprise one or more dedicated sensors that measure quantities indicative of the first vehicle data V1_DATA.

The vehicle 3 further comprises a vehicle refueling interface 10 for coupling the vehicle 3 with the refueling station 5.

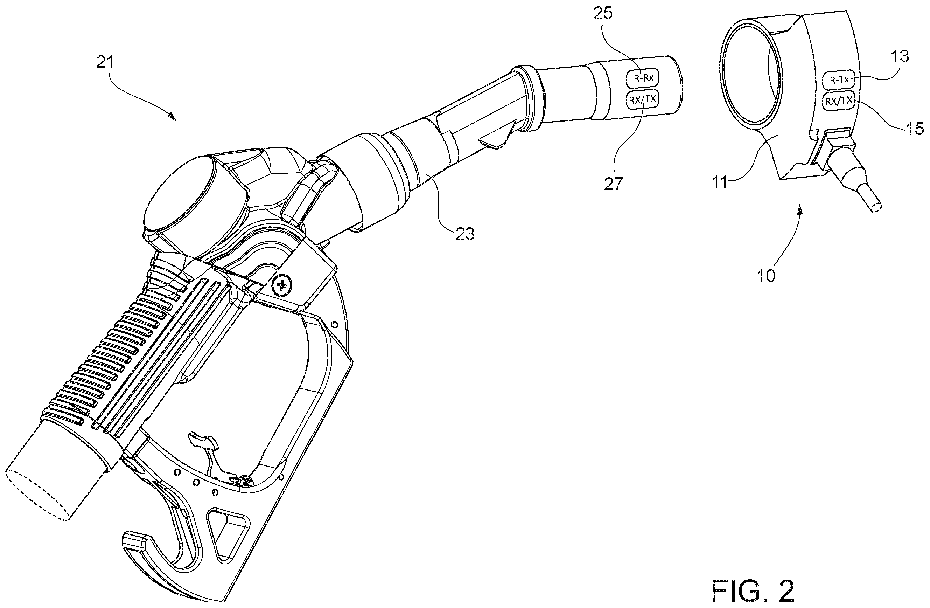

In detail, the vehicle refueling interface 10 comprises a receptacle 11 (an example of which is shown in Figure 2) that, during refueling, is configured to be mechanically coupled to the refueling station 5 so as to allow flow of hydrogen to be received by the hydrogen powering unit 7, for hydrogen refueling of the hydrogen powering unit 7.

The vehicle refueling interface 10 further comprises a transmitter 13 coupled to the hydrogen powering unit 7, that receives the first vehicle data V1_DATA and provides the first vehicle data V1_DATA to the refueling station 5.

Preferably, the transmitter 13 is an infrared transmitter, in particular having a standardized interface to the receptacle 11.

Preferably, the transmitter 13 is configured to send the first vehicle data V1_DATA in accordance with the standard SAE J2799 (in particular in accordance with the latest version of the standard SAE J2799 at the date of filing of the present patent application). This may ensure to maintain a high compatibility of the vehicle 3 to existing refueling infrastructures at the time of filing of the present patent application.

The vehicle refueling interface 10 further comprises a transceiver 15 that is coupled to the hydrogen powering unit 7 and is configured to be electrically coupled to the refueling station 5. In other words, the transceiver 15 is configured to establish a communication with the refueling station 5, in particular a parallel communication with the refueling station 5 with respect to the transmitter 13.

Preferably, the transceiver 15 may be coupled wirelessly to the refueling station 5.

In this embodiment, the transceiver 15 is configured to exchange data between the vehicle 3 and the refueling station 5 in a bidirectional way.

According to a preferred embodiment, as schematically shown in Figure 2, both the transmitter 13 and the transceiver 15 may be integrated in the receptacle 11. In particular, the transceiver 15 may be integrated in the receptacle 11 without affecting the integration of the transmitter 13 in the receptacle 11; this may enhance the compatibility with existing vehicles.

The refueling station 5 comprises a hydrogen dispenser 20 that stores hydrogen for the distribution thereof and a station refueling interface 21.

In detail, the station refueling interface 21 comprises a nozzle 23 (an example of which is shown in Figure 2) coupled to the dispenser 20 and configured to be mechanically coupled to the receptacle 11 so that, during refueling, hydrogen can flow from the dispenser 20 to the hydrogen powering unit 7, via the nozzle 23 and the receptacle 11.

The station refueling interface 21 further comprises a receiver 25 that is configured to be coupled with the transmitter 13 and receive the first vehicle data V1_DATA from the transmitter 13.

Preferably, the receiver 25 is an infrared receiver.

The station refueling interface 21 further comprises a transceiver 27 for the exchange of data with the vehicle 3.

In detail, the transceiver 27 is configured to be coupled to the transceiver 15 of the vehicle 3.

According to a preferred embodiment, as schematically shown in Figure 2, both the infrared receiver 25 and the transceiver 27 may be integrated in the nozzle 23.

Preferably, the transceivers 15, 27 are configured to be wirelessly coupled with each other.

According to an embodiment, the transceivers 15, 27 may be coupled with each other via near-field communication technology (NFC). This may ensure high safety of the communication between vehicle 3 and refueling station 5.

According to another embodiment, the transceivers 15, 27 may be coupled with each other via other radio signals such as Bluetooth, WiFi, cellular network, etc.

According to a different embodiment, the transceivers 15, 27 may be coupled with each other via other electromagnetic signals.

According to a further embodiment, the transceivers 15, 27 may be coupled with each other via infrared technology, for example in accordance with the standard SAE J2799 (in particular in accordance with the latest version of the standard SAE J2799 at the date of filing of the present patent application).

In this embodiment, the transceivers 15, 27 are configured to exchange data one with the other in a bidirectional way.

The transceivers 15, 27 allow the transmission of second vehicle data V2_DATA from the vehicle 3 to the refueling station 5 and the transmission of station data S_DATA from the refueling station 5 to the vehicle 3.

The second vehicle data V2_DATA may be data indicative of the health status of the hydrogen powering unit 7.

For example, the second vehicle data V2_DATA may be the same as the first vehicle data V1_DATA. This may guarantee redundancy in the communication between the vehicle 3 and the refueling station 5 and, thus, a high reliability.

Optionally, the second vehicle data V2_DATA may also include additional data with respect to the first vehicle data V1_data that are optional for or not defined in standard SAE J2799 (in particular in accordance with the latest version of the standard SAE J2799 at the date of filing of the present patent application), such as data required for cybersecurity.

For example, the second vehicle data V2_DATA may be communicated in the same means as the first vehicle data V1_DATA.

The station data S_DATA is data indicative of the health status of the refueling station 5, in particular of the health status of the hydrogen dispenser 20.

For example, the station data S_DATA may be indicative of any one or more of: the ID of refueling station 5 or dispenser 20 (e.g., nozzle type), chosen fueling protocol, fuel quality, hydrogen content at the station 5, preheated hydrogen temperature, error codes, warnings.

In addition or in alternative, the health status of the refueling station 5 may also comprise whether data from the vehicle 3 are correctly received. In this case, the station data S_DATA may also indicate a confirmation of the data received from the vehicle 3.

In use, for refueling of the vehicle 3, the refueling station 5 may control the fueling parameters (e.g., flow rate, precool gas temperature, etc.) of hydrogen provided to the vehicle 3, based on the first and the second vehicle data V1_DATA, V2_DATA.

The fact of using second communication means (transceivers 15, 27), in addition to first communication means (13, 25) allows to facilitate a smooth and robust communication between the vehicle 3 and the refueling station 5, thereby contributing to the overall effectiveness, safety and reliability of the refueling operation.

Moreover, the fact that the transceivers 15, 27 allow a bidirectional communication between vehicle 3 and refueling station 5, allows the vehicle 3, in particular the hydrogen powering unit 7, to control the hydrogen refueling also based on the station data S_DATA. In practice, the vehicle 3 may take responsibility for and regulate the refueling process.

This further increases the reliability and effectiveness of the refueling process.

In particular, the refueling system 1 facilitates achieving a high-flow refueling target, for example up to 300 gr/s of hydrogen as defined by standard SAE J2601-5.

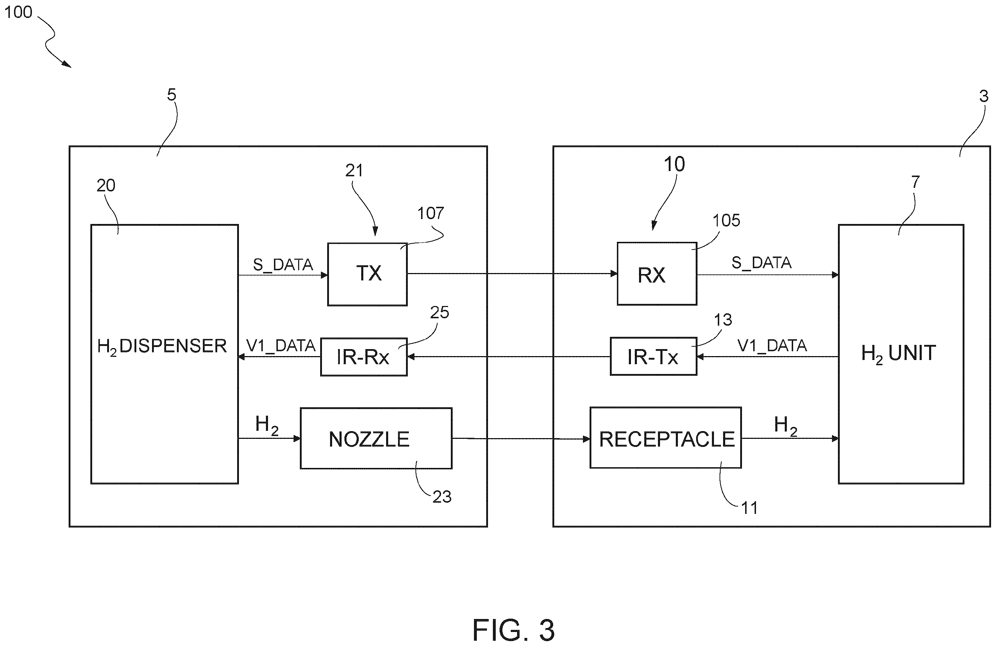

Figure 3 shows a different embodiment of the refueling system, here indicated by 100. In the refueling system 100, the vehicle 3 comprises, instead of the transceiver 15 of Figure 1, a receiver 105 and the refueling station 5 comprises, instead of the transceiver 27 of Figure 1, a transmitter 107.

The transmitter 107 is configured to send the station data S_DATA and the receiver 105 is configured to receive the station data S_DATA.

The receiver 105 and the transceiver 107 may communicate one with the other based on infrared signals, in particular in accordance with the latest version of the standard SAE J2799 at the date of filing of the present patent application). In this case, advantageously, the receiver 105 may be integrated in the receptacle 11 and/or the transmitter 107 may be integrated in the nozzle 23.

Alternatively, the receiver 105 and the transceiver 107 may communicate one with the other bases on radio signals, for example based on NFC, Bluetooth, WiFi and/or cellular network technology, or other electromagnetic signals.

In other words, the system 100 comprises, in addition to the communication channel formed by transmitter 13 and receiver 25, also a further unidirectional channel (transmitter 107 and receive 105) that allows transmission of the station data S_DATA from the station 5 to the vehicle 3.

Therefore, in use, for hydrogen refueling of the vehicle 3, the hydrogen powering unit 7 may be configured to control the refueling process based on the station data S_DATA.

The system 100 may also have a high refueling reliability and effectiveness.

It is clear that modifications can be made to the described refueling systems, which do not extend beyond the scope of protection defined by the claims.

For example, the transceivers 15, 27 may be configured so as to allow transmission only of the second vehicle data V2_DATA from the vehicle 3 to the refueling station 5, and not the transmission of the station data S_DATA from the station 5 to the vehicle 3, in order to achieve communication redundancy and thus a high refueling reliability.

For example, with reference to Figure 1, the transceiver 15 may not be integrated in the receptable 11; for example, the transceiver 25 may be integrated in other portions of the vehicle 3. In addition or in alternative, the transceiver 27 may not be integrated in the nozzle 23; for example, the transceiver 27 may be integrated in other portions of the refueling station 5.

For example, according to a different embodiment of the invention, the system 1 of Figure 1 may not comprise the transmitter 13 and the receiver 25. In other words, the vehicle 3 may comprise only the transceiver 15 and the refueling station 5 may comprise only the transceiver 27. In practice, both the vehicle 3 and the station 5 may comprise only bidirectional communication means (e.g., only transceivers 15, 27).

The described embodiments may be combined to provide further solutions.

## Claims

1. A hydrogen vehicle (3) comprising:
a hydrogen powering unit (7) configured to provide first data (V1_DATA) indicative of a health status of the hydrogen powering unit;
first communication means (13) configured to send the first data (V1_DATA) to a hydrogen refueling station (5); and
second communication means (15; 105) configured to establish a unidirectional or bidirectional communication with the hydrogen refueling station.

2. The hydrogen vehicle according to claim 1, wherein the hydrogen powering unit (7) is configured to provide second data (V2_DATA) indicative of the health status of the hydrogen powering unit, the second communication means (15) being configured to send the second vehicle data to the hydrogen refueling station.

3. The hydrogen vehicle according to claim 1 or 2, wherein the second communication means (15; 105) is configured to receive station data (S_DATA) from the refueling station (5), the hydrogen powering unit (7) being configured to control hydrogen refueling based on the station data.

4. The hydrogen vehicle according to any of the preceding claims, wherein the first communication means (13) comprises an infrared transmitter.

5. The hydrogen vehicle according to any of the preceding claims, the second communication means (15; 105) being configured to establish a communication with the refueling station based on infrared signals.

6. The hydrogen vehicle according to any of claims 1-4, the second communication means (15; 105) being configured to establish a communication with the refueling station based on radio signals, for example one of NFC technology, Bluetooth, WiFi, cellular network.

7. The hydrogen vehicle according to the preceding claim, the second communication means being based on NFC technology.

8. The hydrogen vehicle according to any of the preceding claims, the second communication means (15) being configured to establish a bidirectional communication with the refueling station for receiving station data (S_DATA) from the refueling station and sending second data (V2_DATA) to the refueling station.

9. The hydrogen vehicle according to any of claims 1-7, the second communication means (105) being configured to establish a unidirectional communication with the refueling station for receiving station data (S_DATA) from the refueling station.

10. The hydrogen vehicle according to any of the preceding claims, further comprising a receptacle (11) configured to be mechanically coupled to the refueling station (5) for refueling the hydrogen powering unit (7), the first communication means and/or the second communication means being integrated in the receptacle.

11. The hydrogen vehicle according to any of the preceding claims, wherein the data (V1_DATA, V2_DATA) indicative of the health status of the hydrogen powering unit (7) is indicative of any one or more of: temperature of the hydrogen stored in the hydrogen powering unit, pressure of the hydrogen stored in the hydrogen powering unit, volume of the hydrogen stored in the hydrogen powering unit, presence of a hydrogen leak, type of a receptacle (11) for hydrogen refueling, fueling command.

12. The hydrogen vehicle according to any of the preceding claims, the first communication means and/or the second communication means comprising an infrared transmitter and being configured to transmit data to the hydrogen refueling station according to standard SAE J2799.

13. A hydrogen refueling station (5) comprising:
a hydrogen dispenser (20);
first communication means (25) configured to receive first data (V1_DATA) from a vehicle (3) to be refueled; and
second communication means (27; 107) configured to receive second data (V2_DATA) from the vehicle to be refueled and/or to send station data (S_DATA) to the vehicle to be refueled, the station data being indicative of a health status of the refueling station,
the hydrogen refueling station being configured to control a flow of hydrogen from the hydrogen dispenser to the vehicle to be refueled, based on any one or more of the first data, the second data and the station data.

14. The hydrogen refueling station (5) according to the preceding claim, wherein the first data and/or the second data are indicative of a health status of a hydrogen powering unit (7) of the vehicle to be refueled, the first data and/or the second data being indicative of any one or more of: temperature of the hydrogen stored in the hydrogen powering unit, pressure of the hydrogen stored in the powering unit, volume of the hydrogen stored in the hydrogen powering unit, presence of a hydrogen leak, type of a receptacle (11) for hydrogen refueling, fueling command.

15. The hydrogen refueling station according to claim 13 or 14, the first communication means comprising an infrared receiver (25).

16. The hydrogen refueling station according to any of claims 13-15, the second communication means (107) being configured to provide the station data to the vehicle to be refueled, the refueling station being configured to control the hydrogen flow based on the first data (V1_DATA).

17. The hydrogen refueling station according to any of claims 13-15, further comprising at least one nozzle (23) configured to be coupled to at least one receptacle (11) of the vehicle to be refueled for providing a flow of hydrogen from the hydrogen dispenser to the vehicle to be refueled, the first communication means and/or the second communication means being integrated in the at least one nozzle.

18. The hydrogen refueling station according to any of claims 13-17, the second communication means (27; 107) being configured to establish a communication with the vehicle to be refueled based on radio signals, for example one of NFC technology, Bluetooth, WiFi, cellular network.

19. The hydrogen refueling station according to the preceding claim, the second communication means being based on NFC technology.

20. The hydrogen refueling station according to any of claims 13-19, the first communication means and/or the second communication means comprising an infrared receiver and being configured to receive data from the vehicle to be refueled according to standard SAE J2799.

21. A hydrogen refueling system (1; 100) comprising a hydrogen vehicle (3) according to any of claims 1-12 and a hydrogen refueling station (5) according to any of claims 13-20.

22. A method for refueling, by a hydrogen refueling station, a hydrogen vehicle (3) comprising a hydrogen powering unit (7), the method comprising:
sending, by first communication means (13) of the hydrogen vehicle, to first communication means (25) of the hydrogen refueling station, first data (V1_DATA) indicative of a health status of the hydrogen powering unit;
sending, by second communication means (15) of the hydrogen vehicle, to second communication means (27) of the hydrogen refueling station, second data (V2_DATA) indicative of the health status of the hydrogen powering unit, and/or sending, by second communication means (27; 107) of the hydrogen refueling station to second communication means (15) of the hydrogen vehicle, station data (S_DATA) indicative of a health status of the hydrogen refueling station; and
regulating a flow of hydrogen from the hydrogen refueling station to the hydrogen vehicle, based on the first data (V1_DATA), and based on the second data (V2_DATA) and/or the station data (S_DATA).
